(19) Europäisches Patentamt
European Patent Office
Office européen des brevets

(11) Veröffentlichungsnummer: **0 451 354 A2**

(12) **EUROPÄISCHE PATENTANMELDUNG**

(21) Anmeldenummer: **90124296.6**

(22) Anmeldetag: **15.12.90**

(51) Int. Cl.5: **C08L 31/04**, C08L 69/00, //(C08L31/04,69:00)

(30) Priorität: **27.02.90 DE 4006127**

(43) Veröffentlichungstag der Anmeldung:
**16.10.91 Patentblatt 91/42**

(84) Benannte Vertragsstaaten:
**BE DE FR GB IT NL**

(71) Anmelder: **BAYER AG**

**W-5090 Leverkusen 1 Bayerwerk(DE)**

(72) Erfinder: **Meurer, Kurt Peter, Dr.**
**Dabringhauserstrasse 148**
**W-5000 Köln 80(DE)**
Erfinder: **Ohm, Christian, Dr.**
**Walter-Flex-Strasse 32**
**W-5090 Leverkusen(DE)**
Erfinder: **Eisele, Ulrich, Dr.**
**Alfred-Kubin-Strasse 13**
**W-5090 Leverkusen(DE)**

(54) **Modifizierte Ethen/Vinylacetat-Copolymerisate mit erhöhter Flexibilität bei niedriger Temperatur.**

(57) Mischungen aus Ethylen/Vinylacetat-Copolymerisaten und aliphatischen Polycarbonaten eignen sich aufgrund ihrer Transparenz, ihrer guten thermischen Stabilität und ihrer ausgezeichneten Kälteflexibilität hervorragend zur Herstellung verschiedenster Artikel für Haushalt und Technik.

EP 0 451 354 A2

Die Erfindung betrifft Mischungen aus Ethylen/Vinylacetat-Copolymerisat (EVA) und aliphatischem Polycarbonat (PC). Diese Mischungen besitzen gegenüber PC-freiem EVA eine verbesserte Thermostabilität und eine erhöhte Flexibilität bei niedriger Temperatur, ohne daß die übrigen vorteilhaften Eigenschaften merklich beeinträchtigt werden.

In der Vergangenheit ist es gelungen, durch die Wahl spezifischer Verfahrensparameter EVA mit relativ hohem Gehalt zu copolymerisiertem Vinylacetat (VA), niedrigem Gelgehalt und dennoch hohem Molekulargewicht herzustellen (vgl. z.B. DE-OS 3 731 054, 3 815 946). EVA mit hohem VA-Gehalt vereinigt in sich gute mechanische Eigenschaften mit hoher Beständigkeit gegen organische Lösungsmittel, Kraft- und Schmierstoffe und sehr guter Flammwidrigkeit bei vergleichbarem Füllstoffgehalt. Die Glasübergangstemperaturen Tg von solchem EVA steigen mit zunehmendem VA-Gehalt: VA-Gehalte von 75/80/90/98 Gew.-% entsprechen Glasübergangstemperaturen von -9/-1/+15/+25° C. Eine Erhöhung der Tieftemperaturflexibität ist notwendig, um EVA-Copolymerisate in anderen Thermoplast- oder Kautschukanwendungen einsetzen zu können.

Überraschenderweise wurde gefunden, daß EVA mit hohem VA-Gehalt durch einen Zusatz von hochmolekularen aliphatischen PCs einen derartigen Zuwachs an Flexibität bei niedriger Temperatur (ohne wesentliche Einbußen anderer Materialeigenschaften von EVA-Copolymerisaten) erfährt, daß sich dadurch bislang verschlossene Einsatzgebiete, z.B. für Spezialkautschukanwendungen, eröffnen.

Gegenstand der Erfindung sind also Mischungen aus

A) 1 bis 99, vorzugsweise 50 bis 99, insbesondere 60 bis 95, speziell 70 bis 80 Gew.%, bezogen auf die Summe A + B, EVA mit einem VA-Gehalt von über 50 bis 99, vorzugsweise 60 bis 90, insbesondere 70 bis 85 Gew.-%, bezogen auf EVA,

B) 99 bis 1, vorzugsweise 50 bis 1, insbesondere 40 bis 5, speziell 30 bis 20 Gew.-%, bezogen auf die Summe A + B, aliphatischem PC mit einem als Zahlenmittel bestimmten Molekulargewicht von 2.000 bis 500.000 und gegebenenfalls

C) weiteren Hilfs- und Zusatzstoffen.

Die Copolymerisate A können bis zu 10 Gew.-%, bezogen auf A, copolymerisierte Einheiten anderer Monomerer (als Ethylen und Vinylacetat) enthalten.

Bevorzugte Beispiele solcher Comonomerer sind Kohlenmonoxid, Vinylpropionat und vor allem Verbindungen, die außer einer copolymerisierbaren C=C-Doppelbindung noch eine reaktive Gruppe enthalten, die beim Einbau der Monomeren in die Polymerkette erhalten bleibt und eine Vulkanisation des erhaltenen Copolymerisats mit verschiedenen Vulkanisationsmitteln erleichtert. Solche Comonomere mit reaktiven Gruppen sind z.B. Verbindungen der Formeln

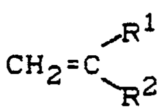 und/oder 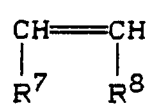

worin

| | |
|---|---|
| $R^1$ | Wasserstoff, $C_1$-$C_6$-Alkyl, -CN oder Halogen (Fluor, Chlor, Brom), |
| $R^2$ | $-COOR^3$, -CN oder Halogen (Fluor, Chlor, Brom), |
| $R^3$ | $[R^4O]_n$ $R^5$ oder Wasserstoff, |
| $R^4$ | $C_1$-$C_6$-, vorzugsweise $C_2$- und/oder $C_3$-Alkylen, |
| $R^5$ | Wasserstoff, $C_1$-$C_6$-Alkyl, -CN, $-OR^6$, $-COR^6$ oder Halogen (Fluor, Chlor, Brom), |
| $R^6$ | Wasserstoff oder $C_1$-$C_6$-Alkyl, und |
| $R^7$, $R^8$ | $-CO_2R^5$, -CN oder Halogen (Fluor, Chlor, Brom), |
| n | eine ganze Zahl von 1 bis 10 bedeuten. |

Bevorzugte "andere Monomere" umfassen beispielsweise Acrylsäure, Acrylamid, Acrylsäurehydroxymethylester, Acrylsäureglycidylester, Acrylsäureallylester, Acrylsäure-ß-chlorethylester, N-Vinyl-acrylsäureamid und die entsprechenden Methacrylsäurederivate, aber vorzugsweise nicht Vinylchlorid.

Von 50 ppm bis 1 Gew.-%, vorzugsweise 200 ppm bis 1 Gew.-%, (bezogen auf A) der "anderen Monomeren" können vernetzend wirkende Verbindungen mit mindestens 2 Acryloyl- oder Methacryloylgruppen pro Molekül und mit einem Molekulargewicht von 126 bis 1000, vorzugsweise von 126 bis 500, sein, beispielsweise Acrylsäureanhydrid, Methacrylsäureanhydrid, die Acrylate und Methacrylate von mehrwertigen, insbesondere von 2- und 3-wertigen, aliphatischen, cycloaliphatischen, araliphatischen und aromatischen Alkoholen mit 2 bis 24 C-Atomen pro Molekül, also z.B. Acrylate und Methacrylate von Ethylenglykol, Propandiol-1.2 und -1.3, Butandiol-1.2, -1.3, -2.3 und -1.4, Neopentylglykol, Hexandiolen, insbesondere

Hexandiol-1.6, Cyclohexandiol-1.4, 1.4-Bis-(hydroxymethyl)-cyclohexan, Hydrochinon, Resorcin, Bisphenol-A, oxethyliertem Bisphenol-A, Hydrochinon-di(ß-hydroxyethyl)-ether; von Glycerin, Trimethylolethan und -propan, Phloroglucin.

Solche vernetzend wirkenden (Meth-)Acryloylverbindungen umfassen auch Acrylate und Methacrylate von Polyetherpolyolen, vorzugsweise von Polyethylen- und Polypropylenglykolen mit 1 bis 20, vorzugsweise 1 bis 12, Ether-Sauerstoffatomen pro Molekül; insbesondere von Di- und Triethylenglykol und von Di-und Tripropylenglykol.

Die erfindungsgemäßen Mischungen enthalten weniger als 10 Gew.-%, bezogen auf die Summe A + B, Vinylchloridpolymerisat und insbesondere weniger als 10 Gew.-%, bezogen auf die Summe A + B, Vinylchloridpolymerisat mit einem Gehalt an copolymerisiertem Vinylchlorid von mindestens 80 Gew.-%; vorzugsweise enthalten sie auch weniger als 10 Gew.-%, bezogen auf die Summe A + B, Vinylchloridcopolymerisat mit einem Gehalt an copolymerisiertem Vinylchlorid unter 80 %. Sie enthalten weniger als 10 Gew.-%, bezogen auf die Summe A + B, von mit Vinylchlorid gepfropften Polymerisaten, insbesondere solchen mit Gehalten an copolymerisiertem Vinylchlorid von 40 bis 60 Gew.-%, Besonders bevorzugte erfindungsgemäße Mischungen sind völlig frei von Vinylchloridhomo- und -copolymerisaten.

Die erfindungsgemäßen Mischungen schließen den Gegenstand der DE-OS 2 823 161 aus.

Die Copolymerisate A besitzen im allgemeinen Mooney-Viskositäten (nach DIN 53 523) von 5 bis 40 (ML-4) 100 °C und als Gewichtsmittel bestimmte Molekulargewichte $\overline{M}_w$ von 40.000 bis 1.000.000, vorzugsweise von 100.000 bis 500.000.

Die molekularen Strukturparameter, insbesondere das mittlere Molekulargewicht $\overline{M}_w$, werden durch Gelpermeationschromatographie, gekoppelt mit Viskosimetrie und Trübungstitration, wie folgt ermittelt:

Die Proben werden mit einer Konzentration von 10 g/l in $CH_2Cl_2$ angesetzt und nach 24 Stunden bei Raumtemperatur ultrazentrifugiert (1 Stunde bei 20.000 $min^{-1}$). Das abgetrennte Sediment wird bei 60 °C im Vakuum getrocknet und ausgewogen ($\Upsilon_{UZ}$). Von der Sollösung wird zusätzlich mit einem automatisierten Ubbelohde-Kappilarviskosimeter der Staudinger-Index ($[\eta]_{Sol}$) in $CH_2Cl_2$ bei 25 °C bestimmt.

Die gelchromatographische Trennung erfolgt an 8 hintereinander geschalteten Styragel®-Säulen (Porengröße $10^2/10^2/10^3/10^3/10^4/10^4/10^5/10^6$ nm; Gesamtlänge 976 cm), 2,0 ml der mit $CH_2Cl_2$ auf c = 2 g/l verdünnten Sollösung werden nach Filtration durch einen Membranfilter mit einem Porendurchmesser von 1,2 $\mu$m aufgegeben und mit $CH_2Cl_2$ (Flußgeschwindigkeit 0,5 ml/min) eluiert` Als konzentrationsproportionaler Detektor dient ein Refraktometer. Zum spezifischen Nachweis der Acetatbande wird ein IR-Filterphotometer bei $\lambda$ = 5,76 ($\lambda$ = 1.736 nm) eingesetzt.

Gekoppelt an die gelchromatographische Trennung wird mit jeweils 5 ml des Eluates - entsprechend einem count im Gelchromatogramm - automatisch eine Viskositätsmessung in einem modifizierten Ubbelohde-Viskosimeter und danach eine Trübungstitration durchgeführt. Für die Titration wird das Eluat in eine Küvette geleitet, die sich in einem geschwärzten Metallgehäuse befindet, und mit Hilfe einer Schlauchpumpe das Fällungsmittel (Methanol) kontinuierlich mit 2 ml/min, zugegeben. Insgesamt werden 15 ml Fällungsmittel zugegeben. Ein Rührer (8.000 U/min) sorgt für eine schnelle Durchmischung der Komponenten. Die Küvette wird mit einer Lichtemissionsdiode beleuchtet. Die Streulichtintensität des Lösungs-/Fällungsmittel-Gemisches wird mit einer optischen Einrichtung unter einem Winkel von 20 °C zum Primärstrahl gemessen und in Abhängigkeit der zudosierten Fällungsmittelmenge registriert.

Während einer gelchromatographischen Untersuchung fallen 75 derartige Eluatfraktionen an, von denen ca. 20 bis 30 die aufgetrennte Probe enthalten. Die Berechnung der Molekulargewichtsverteilung aus den refraktometrischen und viskosimetrischen Daten erfolgt anhand bekannter Konstanten mit Hilfe einer universellen Eichkurve nach der Methode von Benoit (H. Benoit, P. Rempp, Z. Grubisic, J. Polym. Sci., Polym. Lett. Ed. 3, 77 (1965); Polystyrol-Standards im Molekulargewichtsbereich von 600 bis 10 000 000; Aufstellung der Eichkurve gemäß der Gleichung

$$\log([\eta]\cdot M) = f(V_E)$$

$[\eta]$ = Staudinger-Index, bestimmt in Methylenchlorid bei 25 °C in einem Ubbelohde-Kappilarviscosimeter

M = Molekulargewicht

$V_E$ = Elutionsvolumen in 5 ml-Einheiten)`

Die Copolymerisate A besitzen vorzugsweise eine molekulare Uneinheitlichkeit

$$\frac{\bar{M}_w}{\bar{M}_n} - 1$$

von 1 bis 15.

Der Gelgehalt der Copolymerisate A kann durch 24-stündige Extraktion mit Toluol im Soxhlet-Aufsatz als der Prozentsatz des unlöslichen Anteils bestimmt werden.

Die Polycarbonate B sind - anders als die häufiger verwendeten aromatischen Polycarbonate auf Basis von Diphenolen und Kohlensäure - aliphatische Polycarbonate auf Basis von aliphatischen und/oder cycloaliphatischen Diolen, Kohlensäure (oder Kohlensäurevorläufern), gegebenenenfalls Verzweigungsmitteln und gegebenenfalls Kettenabbrechern.

Bevorzugte Diole für die Herstellung der Polycarbonate B sind

a) Diole mit 2 bis 18 C-Atomen der Formel

HO-X-OH

worin

X einen sauerstofffreien (cyclo)aliphatischen zweiwertigen Rest,

b) aliphatische Polyetherdiole,

c) (cyclo)aliphatische Polyesterdiole bedeutet.

Bevorzugte Diole a) umfassen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-(hydroxymethylcyclohexan) und 2-Methyl-1,3-propandiol.

Bevorzugte Polyetherdiole b) umfassen Poly-$C_2$-$C_{10}$-(vorzugsweise -$C_2$-$C_4$-)alkylenglykole mit 2 bis 350, vorzugsweise 3 bis 250, Alkylenoxideinheiten pro Molekül und mit Molekulargewichten von 106 bis 20.000, vorzugsweise 200 bis 10.000, insbesondere 200 bis 1.000.

Bevorzugte Beispiele sind Poly-(ethylenoxid)-glykole, Poly-(propylenoxid)-glykole, Poly-(ethylenoxid/propylenoxid)-glykole, Poly-(butylenoxid)-glykole, Poly-(tetrahydrofuran)-glykole, Poly-(pentylenoxid)-glykole, Poly(hexamethylenoxid)-glykole, Poly-(heptamethylenoxid)-glykole und Polyoctamethylenoxid)-glykole.

Bevorzugte Polyesterdiole c) umfassen Umsetzungsprodukte mehrbasischer, vorzugsweise zweibasischer, (cyclo)aliphatischer Carbonsäuren und mehrwertiger, vorzugsweise zweiwertiger, (cyclo)aliphatischer Alkohole, Bevorzugte Polyesterdiole c) besitzen als Zahlenmittel bestimmte Molekulargewichte von 200 bis 6.000, vorzugsweise von 1.000 bis 2.500.

Als mehrbasische Carbonsäuren für die Herstellung der Polyesterdiole C) eignen sich vorzugsweise Verbindungen mit 2 bis 12 C-Atomen und 2 oder 3 Carboxylgruppen pro Molekül, wie z.B. Oxalsäure, Malonsäure, Bernsteinsäure, Adipinsäure, Korksäure, Azelainsäure, Sebazinsäure, Hexahydrophthalsäure, Glutarsäure und deren Gemische. Selbstverständlich können auch - soweit zugänglich - die entsprechenden Anhydride oder Ester eingesetzt werden.

Als mehrwertige Alkohole für die Herstellung der Polyesterdiole c) kommen neben den oben genannten Diolen a) auch die Polyetherdiole b) bis zu einem Molekulargewicht von 250 in Frage, also z.B. Di-, Tri- und Tetraethylenglykol, Di-, Tri- und Tetrapropylenglykol und Dibutylenglykol.

Für die Herstellung der Polyesterdiole c) eignen sich auch Hydroxycarbonsäuren mit vorzugsweise 4 bis 10 C-Atomen pro Molekül, wie z.B. $\beta$-Hydroxypropionsäure- $\Upsilon$-Hydroxybuttersäure, $\delta$-Hydroxyvaleriansäure, $\epsilon$-Hydroxycapronsäure, 7-Hydroxyheptansäure, 8-Hydroxyoctansäure und 4-Hydroxy-cyclohexancarbonsäure sowie die entsprechenden Lactone.

Die Komponenten a), b) und c) können jeweils alleine zur Herstellung der Polycarbonate B eingesetzt werden; aber auch ihre Mischungen können verwendet werden, wobei dann bei Verwendung von Polyetherdiolen b) und Polyesterdiolen c) Polyetherestercarbonate B entstehen. (In diesem Fall ist ein Molverhältnis b:c von 1:20 bis 20:1 bevorzugt.)

Bevorzugte Polycarbonate B besitzen eine Grenzviskosität [$\eta$] von 0,5 bis 2,5, vorzugsweise 0,8 bis 1,5 dl/g (gemessen in Tetrahydrofuran bei 25° C).

Die Polycarbonate B und Verfahren zu ihrer Herstellung sind bekannt (DE-OS 2 732 718, DE-OS 2 823 161, EP-A 43 022, EP-A 105 399) oder sie können, soweit sie nicht bekannt sind, durch analoge Verfahren hergestellt werden. Sie enthalten im Mittel 10 bis 1.000, vorzugsweise 20 bis 500, Carbonatgruppen pro Molekül.

Die Polycarbonate B besitzen im allgemeinen Mooney-Viskositäten (nach DIN 53 523) von 5 bis 90 (ML-4) 100 °C und als Gewichtsmittel bestimmte Molekulargewichte $\overline{M}w$ von 40 000 bis 1 200 000, vorzugsweise 100 000 bis 700 000.

Die Polycarbonate B können beispielsweise durch Umsetzung der Diole mit Kohlensäurebisarylestern, wie z.B. Diphenylcarbonat oder Bis-arylcarbonaten der Formel

$$ArO-\underset{\underset{O}{\|}}{C}-O-X-O-\underset{\underset{O}{\|}}{C}-OAr$$

worin

X die oben angegebene Bedeutung hat und

Ar für einen $C_6$-$C_{18}$-Arylrest steht,

bei Temperaturen von 100 bis 200 °C in Gegenwart von Umesterungskatalysatoren hergestellt werden.

Die Komponenten lassen sich im Schmelzzustand in Thermoplasten verarbeitenden Extruderaggregaten mischen.

Dabei ist zu beachten, daß die Extruderwellen so gestaltet sind, daß man eine gute Durchmischung erreicht. Der starke weichmachende Effekt der Polycarbonate B bewirkt auch, daß die erfindungsgemäßen Mischungen bei verhältnismäßig niedrigen Temperaturen (140 bis 180 °C) hergestellt werden können, was sich günstig auf die Eigenfärbung der Mischungen auswirkt. Selbstverständlich kann auch bei höheren Temperaturen (180 bis 250 °C) gearbeitet werden. Es lassen sich bei dieser Verfahrensweise auch direkt Fertigartikel wie Folien, Stränge oder Spritzgußkörper herstellen.

Die erfindungsgemäßen Mischungen lassen sich beispielsweise durch Spritzguß, Extrusion oder Hohlkörperblasen verarbeiten.

Ein besonderer Vorzug der erfindungsgemäßen Mischungen besteht in ihrer Transparenz und in der hervorragenden Verträglichkeit beim Mischen der Komponenten.

Die erfindungsgemäßen Mischungen lassen sich zur Herstellung von Gebrauchsgegenständen wie Spritzgußartikel für Haushalt und Technik verwenden und zu Dichtungen, Folien oder optischen Artikeln, insbesondere zu Verbundgläsern, verarbeiten.

Die erfindungsgemäßen Mischungen können auch vulkanisiert werden. Die Vulkanisation kann in Gegenwart üblicher Vulkanisiermittel erfolgen; Beispiele hierfür umfassen elementaren Schwefel, Schwefelspender, Ethylenthioharnstoff, cyclische Thiuramdisulfide, Peroxide, Vernetzerharze, Chinonderivate, Diisocyanate, Dithioniten, bifunktionelle Bunte-Salze, Diazoverbindungen, Dinitrosoverbindungen, Nitrene, Dithiole, Bisnitrilimine, Bishydrosilane.

Neben den Vulkanisiermitteln verwendet man gewöhnlich Vulkanisationsbeschleuniger, wie z.B. Thiuramderivate, Guanidin- und Mercapto- und Sulfenamidbeschleuniger (Thiazolderivate), daneben Aktivatoren wie Zinkoxid, Magnesiumoxid, Calciumoxid sowie Fettsäuren, wie z.B. Stearinsäure.

Vulkanisiermittel, Beschleuniger und Aktivatoren zählen, ebenso wie Füllstoffe und Stabilisatoren, zu den weiteren Hilfs- und Zusatzstoffen C.

Füllstoffe können in üblicher Weise mitverwendet werden. Der bevorzugteste Füllstoff ist Ruß. Weichmacher, wie z.B. Mineralöl, können ebenfalls eingesetzt werden. Art und Menge der Füllstoffe und Weichmacher werden so gewählt, daß die Härte der Vulkanisate sowie die sonstigen gewünschten Eigenschaften, wie z.B. Abrieb, Rutschfestigkeit und Hysterese, den Praxisanforderungen genügen.

Stabilisatoren gegen thermischen oxidativen Angriff können die Vulkanisate gegen Alterung schützen. Bevorzugte Stabilisatoren sind sterisch gehinderte Phenolderivate und Derivate des Phenylendiamins sowie Kondensationsprodukte von Anilinen und Ketonen.

Die Vulkanisation kann bei Temperaturen von 100 bis 200 °C, vorzugsweise 130 bis 180 °C, gegebenenfalls unter einem Druck von 10 bis 200 bar, erfolgen.

## Beispiele

Die in den nachfolgenden Beispielen verwendeten Polymeren I, II und V sowie die erfindungsgemäßen Mischungen III, IV, VI und VII sind zusammen mit den dazugehörigen Glasübergangstemperaturen in Tabelle 1 aufgeführt.

Tabelle 1

| | I | II | III | IV | V | VI | VII |
|---|---|---|---|---|---|---|---|
| Polyester-carbonat | 100 | - | 20 | 30 | - | 20 | 30 |
| EVA 70* | - | 100 | 80 | 70 | - | - | - |
| EVA 80** | - | - | - | - | 100 | 80 | 70 |
| Tg (DSC) °C | -49,5 | -13,5 | -27 | -30,5 | -1,0 | -19 | -23 |

* VA-Gehalt: 70 Gew.-%

** VA-Gehalt: 80 Gew.-%

EVA ist mit PEC sehr gut verträglich. Die Blends zeigen nur eine Glasübergangstemperatur, die sich mit zunehmendem PEC-Gehalt von der Glasübergangstemperatur des reinen EVA auf die des reinen PEC zubewegt.

Die in Tabelle 1 aufgeführten Polymeren bzw. Polymermischungen wurden auf in der Kautschukindustrie üblichen Mischaggregaten (Walze, Innenmischer) mit weiteren Bestandteilen gemischt. Die erhaltenen Mischungen wurden zu 2 mm starken Platten gepreßt (170 °C/200 bar/20 min).

Die mechanischen Eigenschaften wurden nach DIN 53 504 (Zugversuch) an S II-Stäben, der Druckverformungsrest (DVR) nach DIN 53 517 (Probenform DIN-B; 70 h/100 °C), der Torsionsschwingungsversuch nach DIN 53 445 und die Volumenquellung in ASTM-Öl III gemäß DIN 53 521 (Probenform: S II-Stäbe; 70 h/150 °C) bestimmt.

Die Ergebnisse sind in Tabelle 2 zusammengefaßt (Mischungsanteile in Gewichtsteilen).

Tabelle 2

| Probe | 1 | 2 | 3 | 4 | 5 | 6 | 7 |
|---|---|---|---|---|---|---|---|
| Polyester-carbonat | 100 | - | 20 | 30 | - | 20 | 30 |
| EVA 70 | - | 100 | 80 | 70 | - | - | - |
| EVA 80 | - | - | - | - | 100 | 80 | 70 |
| Stearinsäure | 1 | 1 | 1 | 1 | 1 | 1 | 1 |
| Alterungs-schutzmittel[1)] | 3 | - | - | - | - | - | - |
| Hydrolyse-schutzmittel[2)] | 3 | 1,5 | 1,5 | 1,5 | 1,5 | 1,5 | 1,5 |
| CaO | 3 | - | 3 | 3 | - | 3 | 3 |
| Ruß | 55 | 40 | 40 | 40 | 40 | 40 | 40 |
| TAC[3)] | 3,5 | 3,5 | 3,5 | 3,5 | 3,5 | 3,5 | 3,5 |
| Peroxid[4)] | 4 | 4 | 4 | 4 | 4 | 4 | 4 |
| Zugfestig-keit (MPa) | 11,9 | 19,9 | 13,4 | 10,4 | 18,3 | 12,7 | 9,8 |
| Bruch-dehnung (%) | 220 | 205 | 250 | 270 | 195 | 250 | 285 |
| Spannungswert 100 % (MPa) | 5,3 | 6,4 | 3,6 | 2,6 | 8,8 | 4,1 | 2,7 |
| DVR (%) | 28 | 6 | 15 | 19 | 8 | 21 | 26 |
| Torsion Röhlig T 5 ($^{o}C$) | -2,5 | 0,6 | -4,8 | -8,1 | 13,6 | 4 | 0,7 |
| Volumen-quellung (%) | 15,8 | 40,3 | 31,5 | 25 | 17,2 | 12,8 | 9,4 |

1) ®Rhenovin DDA-70 der Fa. Rheinchemie Rheinau GmbH, Mannheim, Polymeralterungsschutzmittel auf Basis eines Diphenylamin-Derivats

2) ®Rhenogran P 50 der Fa. Rheinchemie Rheinau GmbH, Mannheim, 50 gew.-%iges Polycarbodiimid, phlegmatisiert mit EVA

3) ®Rhenofit TAC/S der Fa. Rheinchemie Rheinau GmbH, Mannheim, 70 gew.-%iges Triallylcyanurat auf Kieselsäure

4) ®Perkadox 14/40 der Fa. Akzo, Granulat enthaltend 40 Gew.-% Bis-(tert.-butylperoxyisopropyl)-benzol

Die Tabelle 2 zeigt:
Das Mischen von EVA mit PEC führt zu einer deutlichen Verbesserung der Kälteflexibilität bzw. zu einer Verminderung der Ölquellung.

**Patentansprüche**

1. Mischungen aus
   A) 1 bis 99 Gew.-%, bezogen auf die Summe A + B, Ethylen/ Vinylacetat-Copolymerisat mit einem Gehalt an copolymerisiertem Vinylacetat von über 50 bis 99 Gew.-%, bezogen auf Ethylen/

Vinylacetat-Copolymerisat,
B) 99 bis 1 Gew.-%, bezogen auf die Summe A + B, aliphatischem Polycarbonat mit einem als Zahlenmittel bestimmten Molekulargewicht von 2.000 bis 500.000 und gegebenenfalls
C) weiteren Hilfs- und Zusatzstoffen.

**2.** Mischungen nach Anspruch 1 aus

50 bis 99 Gew.-% A,
50 bis 1 Gew.-% B und

gegebenenfalls weiteren Hilfs- und Zusatzstoffen.

**3.** Mischungen nach Anspruch 1 aus

60 bis 95 Gew.-% A,
40 bis 5 Gew.-% B und

gegebenenfalls weiteren Hilfs- und Zusatzstoffen.

**4.** Mischungen nach Anspruch 1 aus

70 bis 80 Gew.-% A,
30 bis 20 Gew.-% B und

gegebenenfalls weiteren Hilfs- und Zusatzstoffen.

**5.** Mischungen nach Anspruch 1, wobei das Copolymerisat A einen Gehalt an copolymerisiertem Vinylacetat von 60 bis 90 Gew.-% besitzt.

**6.** Mischungen nach Anspruch 1, wobei das Copolymerisat A einen Gehalt an copolymerisiertem Vinylacetat von 70 bis 85 Gew.-% besitzt.

**7.** Verwendung der Mischungen nach Ansprüchen 1-7 zur Herstellung von Vulkanisaten.